# EUROPEAN PATENT SPECIFICATION

(11) **EP 2 545 317 B1**
(45) Date of publication and mention of the grant of the patent: **24.08.2016**
(21) Application number: 11752912.3
(22) Date of filing: 23.02.2011
(51) Int. Cl.: F16L 55/18, B29C 63/34, F16L 55/179, F16L 55/26, B08B 9/047, B29C 63/00

(54) **DEVICE AND METHOD FOR OPENING A BRANCH OF A PIPELINE UNDER RENOVATION**
VORRICHTUNG UND VERFAHREN ZUR ÖFFNUNG EINER ROHRLEITUNGSVERZWEIGUNG WÄHREND EINER RENOVIERUNG
DISPOSITIF ET PROCÉDÉ D'OUVERTURE D'UNE DÉRIVATION D'UNE CANALISATION EN RÉNOVATION

(30) Priority: 11.03.2010 FI 20105239
(43) Date of publication of application: 16.01.2013
(73) Proprietor: Consti Talotekniikka OY, 06450 Porvoo (FI)
(72) Inventor: WECKSTRÖM, Jan, FI-06200 Porvoo (FI); TÖRNROOS, Olav, FI-06100 Porvoo (FI)
(74) Representative: LEITZINGER OY
(86) International application number: PCT/FI2011/050163
(87) International publication number: WO 2011/110738

(56) References cited:
- WO-A1-96/12134
- DE-A1- 19 745 497
- DE-U1-202006 002 790
- JP-A- 5 123 912
- US-A- 6 103 052

## Description

The present invention relates to a device and method for opening a branch section closed in connection with the renovation of a pipeline.

Various methods for renovating the pipelines of residential buildings and other similar sites are available on the market. The most frequently used method is still replacing old pipes with new ones, either by demolishing the old ones and installing new ones in the old locations, or by installing new pipes along new routes, in which case the old pipes may remain at least partly in place. These methods require a lot of work in order to reveal the pipes or to make new routes and install new pipes as well as to renew surface structures due to the pipe renovation. They also cause considerable inconvenience to residents when the pipes of residential buildings are renovated and the residents usually have to move out of their apartments for the duration of the renovation project.

Alongside this laborious method of renovation which is, for example in the case of a residential building, nerve-racking to residents, have arisen various quicker methods requiring less demolition work, in which the pipe sections to be renovated are coated/provided with cured-in-place pipes. In the method using cured-in-place pipes, a liner provided with an inner surface of, for example, polyurethane film is used, which is impregnated with a mass mixed with a suitable hardening agent, such as epoxy, polyurethane, polyester or polyurea, and the liner is slipped inside the pipe section to be renovated by pushing, pulling or by blowing compressed air. Once it has hardened, the liner forms essentially uniform internal piping, which is lastly opened at the one or more branch pipes it may comprise.

One problem with this method is opening the branch sections. Currently, for example, a drill head at the end of a push rod is used, which is pushed to the branch section and opening is carried out by drilling. The problem is that this type of a solution is only applicable to straight pipe sections, in which case excavation and chipping are required.

In DE19745497A1 is disclosed a device for monitoring and / or modifying the interior walls of pipes, particularly smaller diameters, which moves inside the tube and can be set at any point. The front part of the device is formed as a movable arm which carries at least one machining tool and / or an inspection device and is opposite the tube axis axially rotatable and pivotable radially.

The aim of the present invention is to provide an improved device and method for opening branch sections that have closed up in a renovation process using cured-in-place pipes or the like.

To achieve this aim, the device according to the invention is characterised in that the opening device comprises a body part dimensioned to be essentially smaller than the diameter of the pipeline, which is provided with a fluid-driven drive motor, to the output shaft of which motor is connected a rotating opening tool, and to which body part is connected a fluid tube of flexible but pushable material, by means of which the opening device can be pushed inside the pipeline, also past any bends, to the branch section to be opened, whereupon when the fluid tube is pressurised, it becomes rigid so that the opening device can be pushed with sufficient force against the surface closing the branch section opening to be opened. The method according to the invention is, on the other hand, characterised in that in the method is used an opening device which comprises a body part dimensioned to be essentially smaller than the diameter of the pipeline, which is provided with a fluid-driven drive motor, to the output shaft of which motor is connected a rotating opening tool, and to which body part is connected a fluid tube of flexible but pushable material, by means of which the opening device is pushed inside the pipeline, also past any bends, to the branch section to be opened, in which method the fluid tube is pressurised so that it becomes rigid and the opening device is pushed with sufficient force against the surface closing the branch section opening to be opened at the same time as the pressurised fluid rotates the motor.

One advantage of the solution according to the invention is that the opening device does not require separate locking means for locking it against the pipe walls to make possible the actual opening work, but the opening may be carried out simply by pushing the opening device by means of the pressure tube, which rigidifies further when pressurised, thus making it possible to exert sufficient pressure on the opening device for pushing it against the surface to be opened.

The invention is described in greater detail in the following, with reference to the accompanying drawings, in which:
- Figure 1: shows a diagrammatic view in principle of a pipeline to be renovated to which the solution according to the invention is applicable,
- Figure 2: shows a diagrammatic view in principle of an embodiment of the apparatus according to the invention inside a pipe,
- Figure 3: shows a diagrammatic view in principle of another embodiment of the apparatus according to the invention inside a pipe, and
- Figure 4: shows a front view of the solution according to Figure 3.

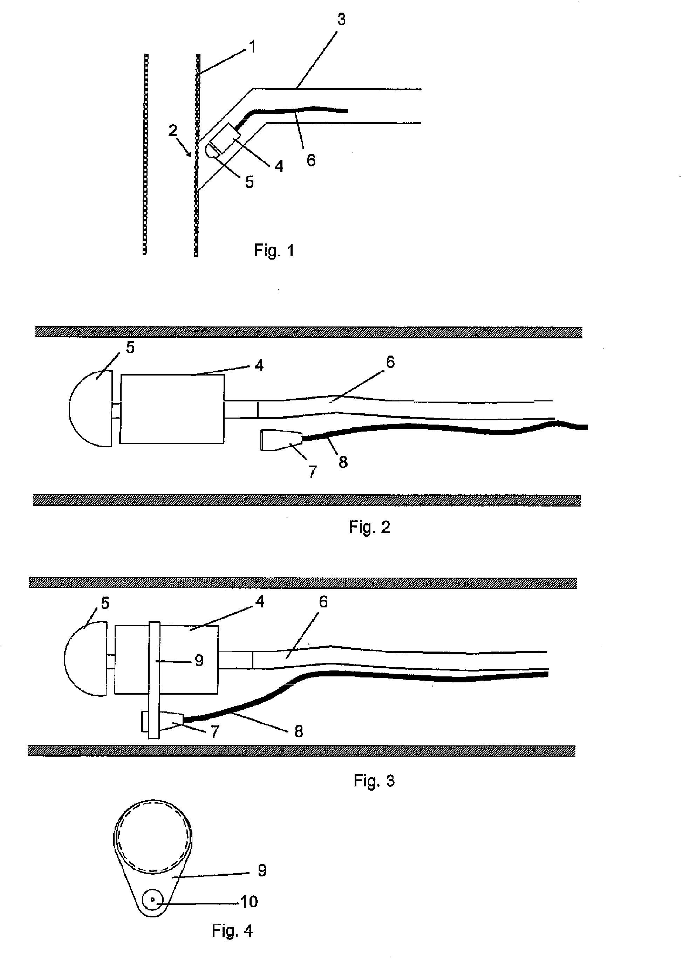

Figure 1 shows a diagrammatic view in principle of the vertical pipe 1 of a pipeline to be renovated with its branch pipe 3. Figure 1 shows the branch section 2 after the hardening of the liner installed in the vertical pipe 1, when it forms a structure extending as a uniform pipe across the branch section. The branch pipe 3 comprises bends which cannot be passed using the known drill head solutions provided at the end of a push rod.

The opening device shown in the Figures comprises a body part 4 dimensioned to be essentially smaller than the diameter of the pipeline, which is provided with a fluid-driven drive motor (not shown), to the output shaft of which motor is connected a rotating opening tool 5. To the body part 4 is in addition connected a fluid tube 6 of flexible but pushable material, by means of which the opening device can be pushed inside the pipeline, also past any bends, to the branch section 2 to be opened. When the fluid tube is pressurised, it is further rigidified so that the opening device can be pushed with sufficient force against the surface closing the branch section 2 opening to be opened. The fluid is preferably compressed air, but a solution functioning, for example, with water hydraulics is also conceivable. The opening tool 5 can be fixed to the body part 4 in a pivoted manner, for example, by means of a ball-and-socket joint, and the device can be provided with control means for directing the opening tool to the most advantageous working position with respect to the section to be opened.

The opening device is preferably provided with an endoscope 7 comprising light and image tubes located inside a flexible tube 8 and a lens part 10 at the front end of the endoscope. The endoscope 7 may be separate from the opening device (Figure 2) or fixed to it permanently or detachably, for example, by means of an attachment flange 9 (Figures 3 and 4). If necessary, the attachment flange may also serve as a supporting point when the opening device is turned to different parts of the opening to be opened.

## Claims

1. An opening device of a branch section in a pipeline having a cured-in-place pipe closing the branch section, said cured-in-place pipe being provided in connection with the renovation of the pipeline by slipping a liner impregnated with a mass mixed with a suitable hardening agent inside the pipe section to be renovated, wherein, once hardened, the liner forms essentially uniform internal piping, the opening device comprising a body part (4) dimensioned to be essentially smaller than the diameter of the pipeline, which is provided with a fluid-driven drive motor, to the output shaft of which motor is connected a rotating opening tool (5), **characterized in that** to the body part is connected a fluid tube (6) of flexible but pushable material, by means of which the opening device can be pushed inside the pipeline, also past any bends, to the branch section to be opened, whereupon when the fluid tube is pressurised, it becomes rigid so that the opening device can be pushed with sufficient force against the liner closing the branch section (2) opening to be opened.

2. An opening device as claimed in claim 1, **characterised in that** the opening tool is a drill head.

3. An opening device as claimed in claim 1, **characterised in that** the opening tool is a dome-shaped grinding head (5).

4. An opening device as claimed in any of the claims 1 to 3, **characterised in that** the fluid is compressed air.

5. An opening device as claimed in any of the claims 1 to 3, **characterised in that** the fluid is water.

6. A method for opening a branch section closed in connection with the renovation of a pipeline, in which renovation method is used cured-in-place pipes, wherein a liner impregnated with a mass mixed with a suitable hardening agent is slipped inside the pipe section to be renovated, wherein, once hardened, the liner forms essentially uniform internal piping, in which opening method is used an opening device which comprises a body part (4) dimensioned to be essentially smaller than the diameter of the pipeline, which is provided with a fluid-driven drive motor, to the output shaft of which motor is connected a rotating opening tool (5), **characterized in that** to the body part is connected a fluid tube (6) of flexible but pushable material, by means of which the opening device is pushed inside the pipeline, also past any bends, to the branch section (2) to be opened, in which method the fluid tube (6) is pressurised so that it becomes rigid and the opening device is pushed with sufficient force against the liner closing the branch section (2) to be opened at the same time as the pressurised fluid rotates the motor.

7. A method as claimed in claim 6, **characterised in that** compressed air is used as the fluid.

8. A method as claimed in claim 6, **characterised in that** water is used as the fluid.

## Patentansprüche

1. Öffnungsvorrichtung eines Zweigabschnitts in einer Rohrleitung, die ein vor Ort repariertes Rohr (cured-in-place pipe) hat, welches den Zweigabschnitt schließt, wobei das vor Ort reparierte Rohr in Verbindung mit der Erneuerung der Rohrleitung durch Einschieben einer Buchse, die mit einer Masse imprägniert ist, welche mit einem geeigneten Härtungsmittel vermischt ist, in den Rohrabschnitt vorgesehen ist, der renoviert werden soll, wobei nach dem Härten die Buchse eine im Wesentlichen gleichförmige interne Rohrleitung bildet, wobei die Öffnungsvorrichtung einen Körperteil (4) umfasst, der so dimensioniert ist, dass er im Wesentlichen kleiner als der Durchmesser der Rohrleitung ist, die mit einem flüssigkeitsgetriebenen Antriebsmotor versehen ist, zur Antriebswelle, deren Motor mit einem rotierenden Öffnungswerkzeug (5) verbunden ist,
**dadurch gekennzeichnet, dass** der Körperteil mit einem Fluidrohr (6) aus einem flexiblen, aber schiebbaren Material, verbunden ist, mit Hilfe dessen die Öffnungsvorrichtung in die Rohrleitung geschoben werden kann, auch an Bögen vorbei, bis zum Zweigabschnitt, der geöffnet werden soll, woraufhin das Fluidrohr, wenn unter Druck gesetzt, starr wird, sodass die Öffnungsvorrichtung mit ausreichender Kraft gegen die Buchse gedrückt werden kann, die die Öffnung des Zweigabschnitts (2) schließt, welche geöffnet werden soll.

2. Öffnungsvorrichtung nach Anspruch 1, **dadurch gekennzeichnet, dass** das Öffnungswerkzeug ein Bohrkopf ist.

3. Öffnungsvorrichtung nach Anspruch 1, **dadurch gekennzeichnet, dass** das Öffnungswerkzeug ein kuppelförmiger Schleifkopf (5) ist.

4. Öffnungsvorrichtung nach einem der Ansprüche 1 bis 3,
**dadurch gekennzeichnet, dass** das Fluid Druckluft ist.

5. Öffnungsvorrichtung nach einem der Ansprüche 1 bis 3,
**dadurch gekennzeichnet, dass** das Fluid Wasser ist.

6. Verfahren zum Öffnen eines Zweigabschnitts, der in Verbindung mit der Erneuerung einer Rohrleitung geschlossen ist, wobei das Erneuerungsverfahren für vor Ort reparierte Rohre verwendet wird, wobei eine Buchse, die imprägniert ist mit einer Masse, welche mit einem geeigneten Härtungsmittel vermischt ist, in den Rohrabschnitt, der renoviert werden soll, geschoben wird, wobei nach dem Härten die Buchse eine im Wesentlichen gleichförmige interne Rohrleitung bildet, wobei bei dem Öffnungsverfahren eine Öffnungsvorrichtung verwendet wird, das einen Körperteil (4) umfasst, der so dimensioniert ist, dass er im Wesentlichen kleiner als der Durchmesser der Rohrleitung ist, die mit einem flüssigkeitsgetriebenen Antriebsmotor versehen ist, zur Antriebswelle, deren Motor mit einem rotierenden Öffnungswerkzeug (5) verbunden ist, **dadurch gekennzeichnet, dass** der Körperteil mit einem Fluidrohr (6) aus einem flexiblen, aber schiebbaren Material verbunden ist, mit Hilfe dessen die Öffnungsvorrichtung in die Rohrleitung geschoben werden kann, auch an Bögen vorbei, bis zum Zweigabschnitt (2), der geöffnet werden soll, wobei bei diesem Verfahren das Fluidrohr (6) unter Druck gesetzt wird, so dass es starr wird und die Öffnungsvorrichtung mit ausreichender Kraft gegen die Buchse gedrückt wird, die den Zweigabschnitt (2) schließt, der geöffnet werden soll, zur selben Zeit, wie das unter Druck gesetzte Fluid den Motor in Rotation versetzt.

7. Verfahren nach Anspruch 6, **dadurch gekennzeichnet, dass** Druckluft als Fluid verwendet wird.

8. Verfahren nach Anspruch 6, **dadurch gekennzeichnet, dass** Wasser als Fluid verwendet wird.

## Revendications

1. Dispositif d'ouverture d'une section de dérivation dans une canalisation comportant un tuyau durci sur place fermant la section de dérivation, ledit tuyau durci sur place étant mis à disposition dans le cadre de la rénovation de la canalisation en glissant une gaine imprégnée d'une masse mélangée avec un agent durcissant approprié à l'intérieur de la section de tuyau à rénover, dans lequel, une fois durcie, la gaine forme une conduite intérieure quasiment uniforme, le dispositif d'ouverture comprenant une partie de corps (4) dimensionnée de façon à être quasiment inférieure au diamètre de la canalisation, laquelle est dotée d'un moteur d'entraînement à entraînement hydraulique, un outil d'ouverture rotatif (5) étant raccordé à l'arbre de sortie dudit moteur, **caractérisé en ce que** la partie de corps est raccordée à un tube à fluide (6) constitué d'un matériau souple mais déplaçable, au moyen duquel le dispositif d'ouverture peut être poussé à l'intérieur de la canalisation, également dans les coudes, vers la section de dérivation à ouvrir, moyennant quoi lorsque le tube à fluide est pressurisé, il devient rigide de telle façon que le dispositif d'ouverture peut être poussé avec une force suffisante contre la gaine fermant l'ouverture de la section de dérivation (2) à ouvrir.

2. Dispositif d'ouverture selon la revendication 1, **caractérisé en ce que** l'outil d'ouverture est une tête de forage.

3. Dispositif d'ouverture selon la revendication 1, **caractérisé en ce que** l'outil d'ouverture est une tête de meulage en forme de dôme (5).

4. Dispositif d'ouverture selon l'une quelconque des revendications 1 à 3, **caractérisé en ce que** le fluide est de l'air comprimé.

5. Dispositif d'ouverture selon l'une quelconque des revendications 1 à 3, **caractérisé en ce que** le fluide est de l'eau.

6. Procédé d'ouverture d'une section de dérivation fermée dans le cadre de la rénovation d'une canalisation, ledit procédé de rénovation employant des tuyaux durcis sur place, dans lequel une gaine imprégnée d'une masse mélangée avec un agent durcissant approprié, dans lequel, une fois durcie, la gaine forme une conduite intérieure quasiment uniforme, ledit procédé d'ouverture employant un dispositif d'ouverture comprenant une partie de corps (4) dimensionnée de façon à être quasiment inférieure au diamètre de la canalisation, laquelle est dotée d'un moteur d'entraînement à entraînement hydraulique, un outil d'ouverture rotatif (5) étant raccordé à l'arbre de sortie dudit moteur, **caractérisé en ce que** la partie de corps est raccordée à un tube à fluide (6) constitué d'un matériau souple mais déplaçable, au moyen duquel le dispositif d'ouverture est poussé à l'intérieur de la canalisation, également dans les coudes, vers la section de dérivation (2) à ouvrir, ledit procédé comprenant la pressurisation du tube à fluide (6) de manière à le rendre rigide et à pousser le dispositif d'ouverture avec une force suffisante contre la gaine fermant la section de dérivation (2) à ouvrir pendant que le fluide sous pression fait tourner le moteur.

7. Procédé selon la revendication 6, **caractérisé en ce que** de l'air comprimé est utilisé comme fluide.

8. Procédé selon la revendication 6, **caractérisé en ce que** de l'eau est utilisée comme fluide.
